# EUROPEAN PATENT APPLICATION

(11) **EP 2 782 003 A2**
(43) Date of publication of application: **24.09.2014**
(21) Application number: 14160654.1
(22) Date of filing: 19.03.2014
(51) Int. Cl.: G06F 3/12, G06Q 30/02

(54) **Proposal server and system for proposing products to customer**

(30) Priority: 22.03.2013 JP 2013060701
(71) Applicant: Kyocera Document Solutions Inc., Chuo-ku Osaka 540-8585 (JP)
(72) Inventor: Tsuji, Chika, Osaka, 540-8585 (JP); Yamagami, Hiromi, Osaka, 540-8585 (JP); Ishizu, Ryuichi, Osaka, 540-8585 (JP); Osono, Yoshiyuki, Osaka, 540-8585 (JP)
(74) Representative: Trinks, Ole

(57) **Abstract**

A proposal server (30) includes a communication unit (33) and a control unit (35). The control unit (35) includes: a used equipment information receiving unit (35a) that receives used equipment information regarding a used equipment of a customer; an product proposal information generating unit (35b) that generates product proposal information (34n) that is used to propose a product to the customer; and a selected logic receiving unit (35d) that receives logic selected from a plurality of logics for generating the product proposal information (34n) by the product proposal information generating unit (35b). The product proposal information generating unit (35b) generates the product proposal information (34n) by the logic received by the selected logic receiving unit (35d) based on the used equipment information received by the used equipment information receiving unit (35a).

## Description

### FIELD

The present disclosure relates to a proposal server and system configured to generate products proposal information that is used to propose a product to a customer.

### BACKGROUND

A typical proposal system for proposing a product to a customer receives used equipment information regarding equipment used by a customer, and generates product proposal information based on the used equipment information.

In a typical proposal system, unless there is a change in the used equipment information, there is no change in the product proposal information that is generated based on the used equipment information. In other words, in a typical proposal system, logic for generating the product proposal information based on the used equipment information is fixed. Therefore, in a typical proposal system, even if the generated product proposal information is suitable for a certain customer, the information may be unsuitable for other customers. Further, in a typical proposal system, even if the generated product proposal information is suitable for a customer at a certain point in time, the information may be unsuitable for the customer at other points in time.

### SUMMARY

A proposal server according to an embodiment of the present disclosure includes a communication unit and a control unit. The communication unit is configured to communicate with an external device. The control unit is configured to control the proposal server. The control unit includes a used equipment information receiving unit, a product proposal information generating unit, and a selected logic receiving unit. The used equipment information receiving unit is configured to receive used equipment information regarding a used equipment of a customer, through the communication unit from the user terminal. The product proposal information generating unit is configured to generate product proposal information that is used to propose a product to the customer. The selected logic receiving unit is configured to receive logic selected from a plurality of logics for generating the product proposal information by the product proposal information generating unit. The product proposal information generating unit is further configured to generate the product proposal information by the logic received by the selected logic receiving unit based on the used equipment information received by the used equipment information receiving unit.

A proposal method according to an embodiment of the present disclosure is executed by a proposal system including a proposal server, an equipment use information collection device, and a user terminal. The proposal method includes: (i) collecting, via the equipment use information collecting device, the used equipment information from the used equipment and output the collected used equipment information; (ii) acquiring and transmitting, via the user terminal, the collected used equipment information that is output from the used equipment information collecting device; (iii) communicating, via the communication unit of the proposal server, with an external device; and (iv) controlling, via a control unit of the proposal server, the proposal server. The controlling includes: (v) receiving, via a used equipment information receiving unit, used equipment information about a used equipment of a customer, through the communication unit (33) from the user terminal (20); (vi) generating, via a product proposal information generating unit, product proposal information that is used to propose a product to the customer; (vii) receiving, via a selected logic receiving unit, logic selected from a plurality of logics for generating the product proposal information by the product proposal information generating unit; and (viii) generating, by the product proposal information generating unit, the product proposal information by the logic received by the selected logic receiving unit based on the used equipment information received by the used equipment information receiving unit.

A non-transitory computer-readable recording medium according to an embodiment of the present disclosure stores a proposal program executable by a computer. The proposal program includes a first program code causes the computer to communicate with an external terminal and a second program code causes the computer to control the proposal server. The second program code includes: a first sub program code for causing the computer to receive, by the first program code, used equipment information regarding a used equipment of a customer; a second sub program code for causing the computer to generate product proposal information that is used to propose a product to the customer; and a third sub program code for causing the computer to receive logic selected from a plurality of logics for generating the product proposal information by the second sub program code. The second sub program code further causes the computer to generate the product proposal information by the logic received by the third program code based on the used equipment information received by the first sub program code.

Additional features and advantages are described herein, and will be apparent from the following detailed description and the figures.

### BRIEF DESCRIPTION OF THE DRAWINGS

In the All drawings are intended to illustrate some aspects and examples of the present disclosure. The drawings described are only schematic and are nonlimiting, and are not necessarily drawn to scale.
FIG. 1 shows a configuration of a proposal system according to an embodiment of the present disclosure.
FIG. 2 shows a configuration of a user terminal as in FIG. 1.
FIG. 3 shows a configuration of a proposal server as in FIG. 1.
FIG. 4 shows exemplary catalog information as in FIG. 3.
FIG. 5 shows an exemplary first print speed range table for an A3 color MFP as in FIG. 3.
FIG. 6 shows a configuration of an image forming system for a customer of a dealer as a user of a user terminal.
FIG. 7 shows exemplary used equipment information collected by a used equipment information collecting device as in FIG. 6.
FIG. 8 shows a procedure of operations of the proposal system when product proposal information is generated.
FIG. 9 shows an exemplary equipment list screen displayed on a display unit of the user terminal.
FIG. 10 shows another exemplary equipment list screen displayed on the display unit of the user terminal.
FIG. 11 shows an exemplary candidate list screen displayed on the display unit of the user terminal.
FIG. 12 shows an exemplary equipment list screen displayed on the display unit of the user terminal.
FIG. 13 shows a procedure of operations of the proposal server as in FIG. 3 when the product proposal information is generated.
FIG. 14 shows a procedure of Hybrid suggestion processing as in FIG. 13.
FIG. 15 shows a procedure of Based on monthly volume processing as in FIG. 13.
FIG. 16 shows a procedure of Based on current device processing as in FIG. 13.

### DETAILED DESCRIPTION

Various embodiments are described below with reference to the figures. It should be understood, however, that numerous variations from the depicted arrangements and functions are possible while remaining within the scope and spirit of the claims. For instance, one or more elements may be added, removed, combined, distributed, substituted, re-positioned, re-ordered, and/or otherwise changed. Further, where this description refers to one or more functions being implemented on and/or by one or more devices, one or more machines, and/or one or more networks, it should be understood that one or more of such entities could carry out one or more of such functions by themselves or in cooperation, and may do so by application of any suitable combination of hardware, firmware, and/or software. For instance, one or more processors may execute one or more sets of programming instructions as at least part of carrying out one or more of the functions described herein.

An embodiment of the present disclosure is described in the following with reference to the attached drawings.

First, a configuration of a proposal system according to the embodiment is described.

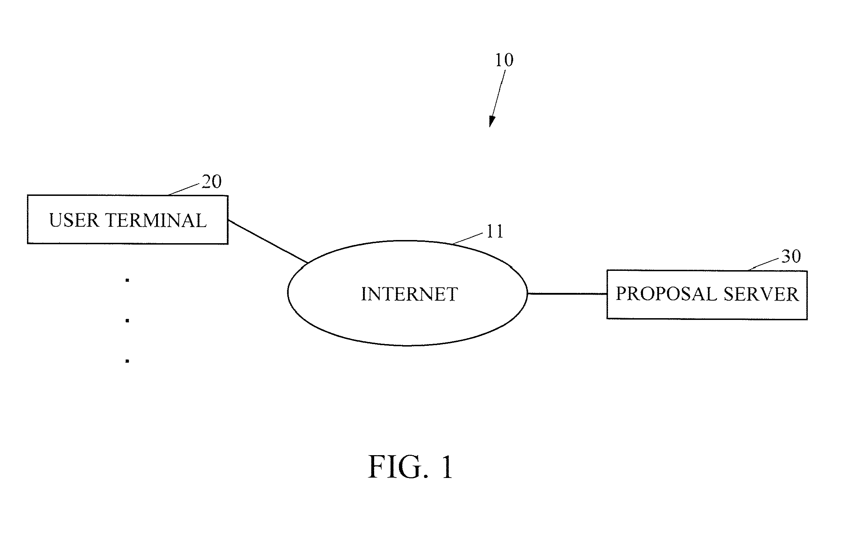

FIG. 1 shows a configuration of the proposal system according to the embodiment.

As in FIG. 1, a proposal system 10 includes a plurality of user terminals including a user terminal 20 used by a dealer of a product such as an image forming apparatus, and a proposal server 30 configured to generate product proposal information that is used to propose a product to a customer of the dealer as a user of the user terminal.

The plurality of user terminals and the proposal server 30 in the proposal system 10 are connected so as to be communicable to each other via the Internet 11. Configurations of the plurality of user terminals in the proposal system 10 are each similar to a configuration of the user terminal 20. Therefore, in the following, the user terminal 20 as a representative of the plurality of user terminals in the proposal system 10 is described.

Note that, the proposal server 30 is managed by a manufacturer of the product. Further, users of the user terminals are dealers of the product. The dealers may sell not only the product of the manufacturer that manages the proposal server 30 but also a product of another manufacturer.

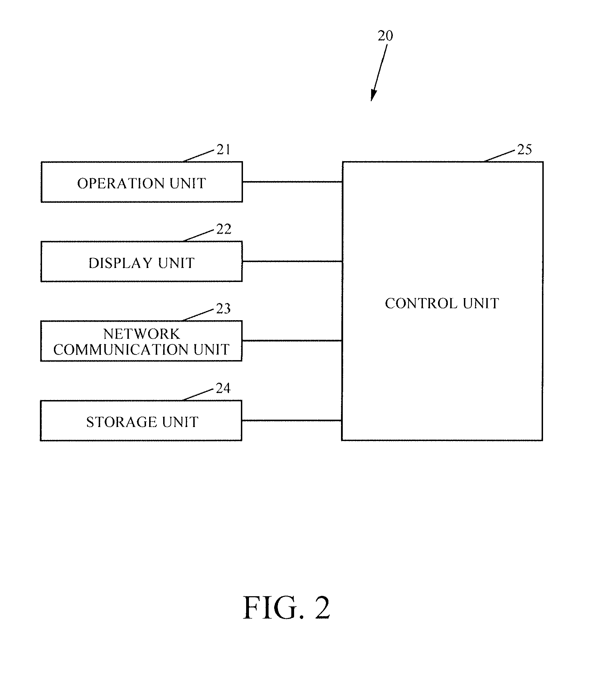

FIG. 2 shows a configuration of the user terminal 20.

As in FIG. 2, the user terminal 20 includes an operation unit 21 being an input device such as a mouse or a keyboard through that various operations are input, a display unit 22 such as a liquid crystal display (LCD) configured to display various kinds of information, a network communication unit 23 configured to communicate to/from an external device via the Internet 11 as in FIG. 1, a storage unit 24 such as a hard disk drive (HDD) configured to store programs and different kinds of data, and a control unit 25 configured to control the entire user terminal 20. The user terminal 20 is made up of a computer such as a personal computer (PC) and a tablet terminal.

The control unit 25 is provided with, for example, a central processing unit (CPU), a read only memory (ROM) configured to store programs and different kinds of data, and a random access memory (RAM) used as a work area for the CPU. The CPU is configured to execute the programs stored in the ROM or the storage unit 24.

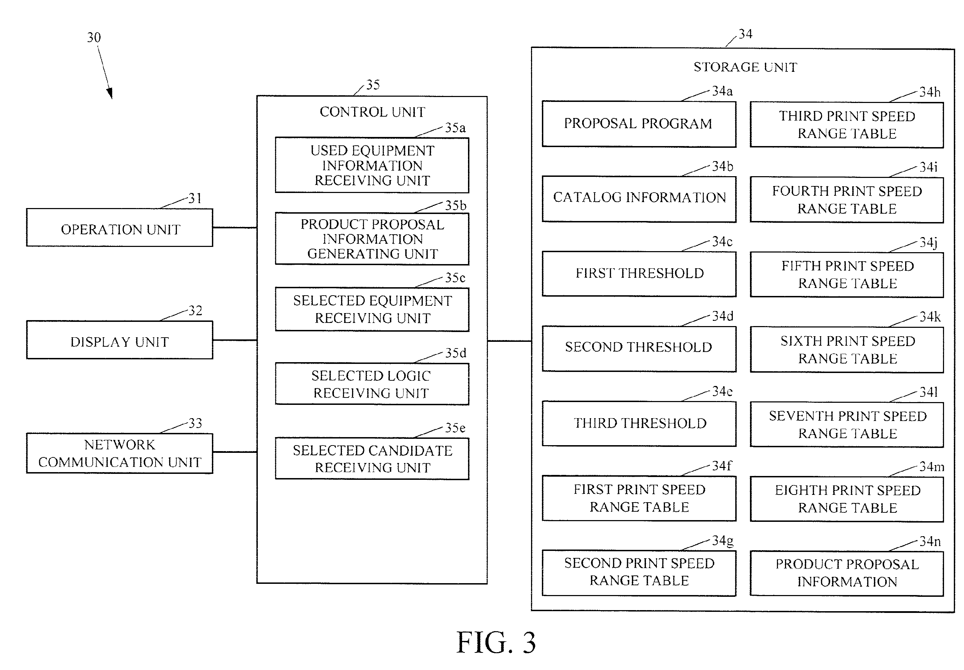

FIG. 3 shows a configuration of the proposal server 30.

As in FIG. 3, the proposal server 30 includes an operation unit 31 being an input device such as a mouse or a keyboard through that various operations are input, a display unit 32 such as an LCD configured to display various kinds of information, a network communication unit 33 configured to communicate to/from an external device via the Internet 11 as in FIG. 1, a storage unit 34 such as an HDD configured to store programs and different kinds of data, and a control unit 35 configured to control the entire proposal server 30. The proposal server 30 is made up of a computer such as a PC.

The storage unit 34 stores a proposal program 34a for proposing product by the dealer as the user of the user terminal. The proposal program 34a may be installed into the proposal server 30 at a stage of manufacturing the proposal server 30, may be additionally installed into the proposal server 30 from a storage medium such as a compact disc (CD) or a digital versatile disc (DVD), or may be additionally installed into the proposal server 30 from the Internet 11.

Further, the storage unit 34 can store catalog information 34b that includes information regarding image forming apparatus as the products. Note that, products included in the catalog information 34b may include not only products of the manufacturer that manages the proposal server 30 but also a product of another manufacturer.

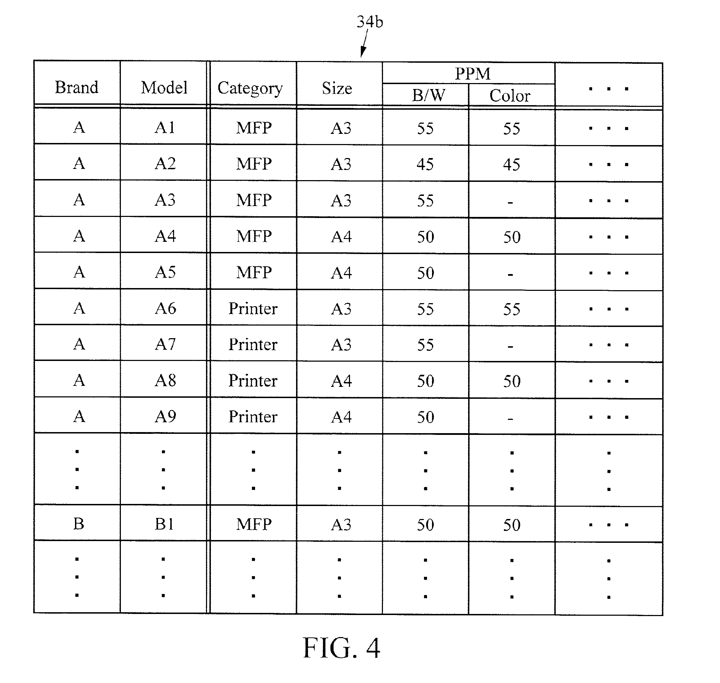

FIG. 4 shows exemplary catalog information 34b.

As shown in FIG. 4, the catalog information 34b includes, for example, "Brand" as an item indicating the manufacturer of the product, "Model" as an item indicating the name of the product, "Category" as an item indicating the kind of the product based on the kind of the job executable by the product, "Size" as an item indicating the maximum paper size printable by the product, and "PPM" as an item indicating the print speed of the product.

The catalog information 34b may include information regarding products of a plurality of manufacturers. Specifically, the catalog information 34b may include a plurality of kinds of values as the value of the item "Brand".

The catalog information 34b includes information regarding a plurality of products. Specifically, the catalog information 34b includes a plurality of kinds of combinations as the combination of the value of the item "Brand" and the value of the item "Model".

As the values of the item "Category" in the catalog information 34b, there are "MFP" indicating a multifunction peripheral (MFP) as the product and "Printer" indicating a dedicated printer as the product. An MFP can execute, other than a "Print" job of producing a print based on print data transmitted from an external device, for example, a "Copy" job of producing a print of an image scanned by a scanner, a "FAX" job of transmitting or receiving a facsimile to or from an external facsimile machine, and a "Scan" job of generating image data from an image scanned by a scanner. A dedicated printer can execute the "Print" job, but cannot execute any of the "Copy" job, the "FAX" job, and the "Scan" job.

As the values of the item "Size" in the catalog information 34b, there are "A3" indicating that the maximum paper size printable by the product is A3 size and "A4" indicating that the maximum paper size printable by the product is A4 size. Specifically, a product whose value of the item "Size" is "A3" is a so-called A3 machine, and a product whose value of the item "Size" is "A4" is a so-called A4 machine.

The item "PPM" in the catalog information 34b is further broken down into "B/W" as an item indicating the monochrome print speed of the product and "Color" as an item indicating the color print speed of the product. The values of the item "B/W" and the item "Color" are the numbers of sheets on which a print can be produced per minute. Note that, when the value of the item "Color" is "-", the product does not execute color printing. Specifically, a product whose value of the item "Color" is "-" is a so-called monochrome machine, and a product whose value of the item "Color" is other than "-" is a so-called color machine.

As in FIG. 3, the storage unit 34 can store a first threshold 34c for selecting a product kind and a second threshold 34d for selecting a product kind for the purpose of selecting the kind of the product based on the kind of the job executable by the product as a candidate to be proposed, and a third threshold 34e for selecting a printable size for the purpose of selecting the maximum paper size printable by the product as a candidate to be proposed. Note that, the first threshold 34c for selecting a product kind, the second threshold 34d for selecting a product kind, and the third threshold 34e for selecting a printable size may be set from the user terminal 20 via, for example, the Internet 11 (see FIG. 1).

Further, the storage unit 34 can store print speed range tables for determining the range of the print speed of the product as a candidate to be proposed. There are eight kinds of print speed range tables which the storage unit 34 can store: a first print speed range table 34f for an A3 color MFP; a second print speed range table 34g for an A3 monochrome MFP; a third print speed range table 34h for an A4 color MFP; a fourth print speed range table 34i for an A4 monochrome MFP; a fifth print speed range table 34j for an A3 color printer; a sixth print speed range table 34k for an A3 monochrome printer; a seventh print speed range table 34l for an A4 color printer; and a eighth print speed range table 34m for an A4 monochrome printer.

The first print speed range table 34f for an A3 color MFP corresponds to a product whose value of the item "Category" is "MFP", whose value of the item "Size" is "A3", and whose value of the item "Color" in the item "PPM" is other than "-" in the catalog information 34b. The second print speed range table 34g for an A3 monochrome MFP corresponds to a product whose value of the item "Category" is "MFP", whose value of the item "Size" is "A3", and whose value of the item "Color" in the item "PPM" is "-" in the catalog information 34b. The third print speed range table 34h for an A4 color MFP corresponds to a product whose value of the item "Category" is "MFP", whose value of the item "Size" is "A4", and whose value of the item "Color" in the item "PPM" is other than "-" in the catalog information 34b. The fourth print speed range table 34i for an A4 monochrome MFP corresponds to a product whose value of the item "Category" is "MFP", whose value of the item "Size" is "A4", and whose value of the item "Color" in the item "PPM" is "-" in the catalog information 34b. The fifth print speed range table 34j for an A3 color printer corresponds to a product whose value of the item "Category" is "Printer", whose value of the item "Size" is "A3", and whose value of the item "Color" in the item "PPM" is other than "-" in the catalog information 34b. The sixth print speed range table 34k for an A3 monochrome printer corresponds to a product whose value of the item "Category" is "Printer", whose value of the item "Size" is "A3", and whose value of the item "Color" in the item "PPM" is "-" in the catalog information 34b. The seventh print speed range table 34l for an A4 color printer corresponds to a product whose value of the item "Category" is "Printer", whose value of the item "Size" is "A4", and whose value of the item "Color" in the item "PPM" is other than "-" in the catalog information 34b. The eighth print speed range table 34m for an A4 monochrome printer corresponds to a product whose value of the item "Category" is "Printer", whose value of the item "Size" is "A4", and whose value of the item "Color" in the item "PPM" is "-" in the catalog information 34b.

In the following, the first print speed range table 34f for an A3 color MFP as a representative of the eight kinds of print speed range tables the storage unit 34 can store is described in detail. Note that, the first print speed range table 34f for an A3 color MFP and the tables other than the first print speed range table 34f for an A3 color MFP of the eight kinds of print speed range tables the storage unit 34 can store are different in the respective values in the tables, but are similar in configuration.

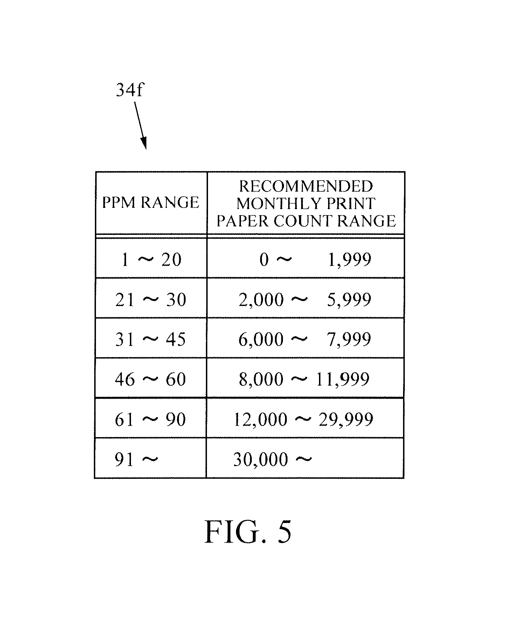

FIG. 5 shows an exemplary first print speed range table 34f for an A3 color MFP as in FIG. 3.

As shown in FIG. 5, the first print speed range table 34f for an A3 color MFP includes "PPM Range" as an item indicating the print speed range of the product and "Recommended Monthly Print Paper Count Range" as an item indicating the recommended monthly print paper count range of the product. For example, in FIG. 5, "1-20" as a value of the item "PPM Range" and "0-1,999" as a value of the item "Recommended Monthly Print Paper Count Range" are related to each other.

As in FIG. 3, the storage unit 34 can store product proposal information 34n that is used to propose a product to a customer of the dealer as the user of the user terminal.

The control unit 35 includes, for example, a CPU, a ROM configured to store programs and various kinds of data, and a RAM used as a work area for the CPU. The CPU runs a program stored in the ROM or the storage unit 34.

By running the proposal program 34a stored in the storage unit 34, the control unit 35 functions as a used equipment information receiving unit 35a for receiving used equipment information regarding image forming apparatus as equipment used by the customer, a product proposal information generating unit 35b for generating the product proposal information 34n, a selected equipment receiving unit 35c for receiving used equipment that is selected from used equipment included in the used equipment information, a selected logic receiving unit 35d for receiving logic selected from a plurality of logics for generating the product proposal information 34n by the product proposal information generating unit 35b, and a selected candidate receiving unit 35e for receiving a candidate selected from product candidates included in the product proposal information 34n.

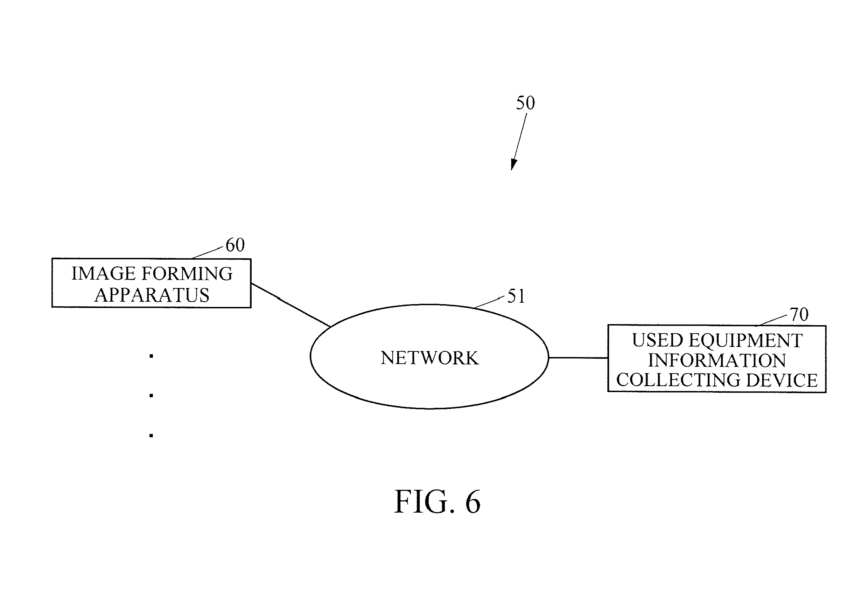

FIG. 6 shows a configuration of an image forming system 50 for a customer of the dealer as the user of the user terminal 20.

As in FIG. 6, the image forming system 50 includes a plurality of image forming apparatus including an image forming apparatus 60, and a used equipment information collecting device 70. The used equipment information collecting device 70 is a computer configured to automatically collect and transmit, as the used equipment information, information of the plurality of image forming apparatus included in the image forming system 50, and may be included in the proposal system of the embodiment. The image forming system 50 includes, as the image forming apparatus, for example, an MFP and a dedicated printer.

The plurality of image forming apparatus and the used equipment information collecting device 70 in the image forming system 50 are connected so as to be communicable to each other via a network 51 such as a local area network (LAN), the Internet, or the like.

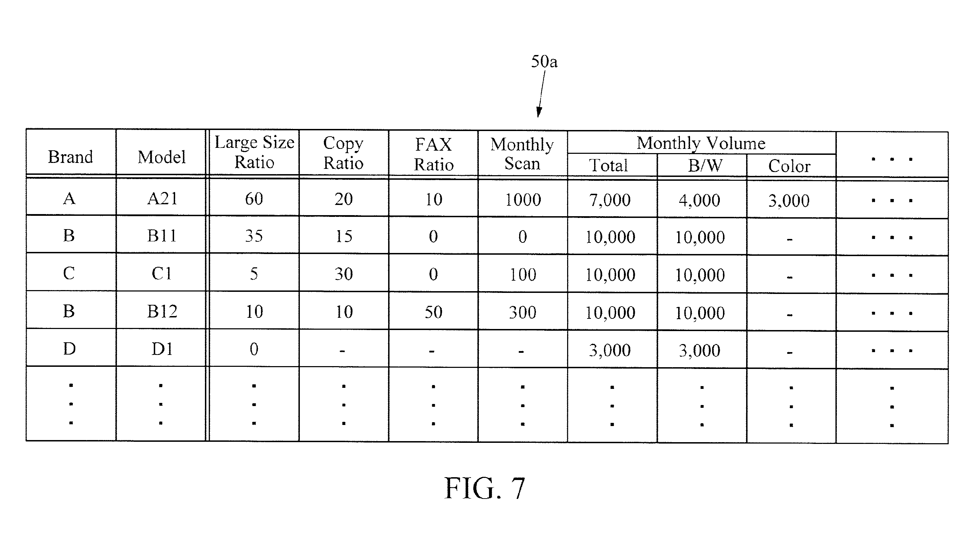

FIG. 7 shows exemplary used equipment information 50a collected by the used equipment information collecting device 70.

As in FIG. 7, the used equipment information 50a includes, for example, "Brand" as an item indicating the manufacturer of the used equipment and "Model" as an item indicating the name of the used equipment.

Further, the used equipment information 50a includes, for example, "Large Size Ratio" as an item indicating the ratio of the print paper count regarding paper sizes larger than the A4 size to the actual total print paper count by the used equipment, "Copy Ratio" as an item indicating the ratio of the actual print paper count in the "Copy" job to the actual total print paper count by the used equipment, and "FAX Ratio" as an item indicating the ratio of the actual print paper count in the "FAX" job to the actual total print paper count by the used equipment.

Further, the used equipment information 50 includes, for example, "Monthly Scan" as an item indicating the actual monthly scan paper count in the "Scan" job by the used equipment and "Monthly Volume" as an item indicating the actual monthly print paper count by the used equipment.

The item "Brand" and the item "Model" in the used equipment information 50a are similar to the item "Brand" and the item "Model", respectively, in the catalog information 34b (see FIG. 4), and thus, description thereof is omitted.

The item "Monthly Volume" in the used equipment information 50a includes "B/W" as an item indicating the actual monthly monochrome print paper count by the used equipment, "Color" as an item indicating the actual monthly color print paper count by the used equipment, and "Total" as an item indicating the total value of the value of the item "B/W" and the value of the item "Color". Note that, the values in the item "Monthly Volume" are calculated by, for example, dividing the actual total print paper count by the used equipment by the number of months during that the used equipment is used.

Next, operation of the proposal system 10 is described.

First, a flow when the product proposal information is generated is described.

The dealer as the user of the user terminal 20 obtains the used equipment information 50a that is output by the used equipment information collecting device 70 in the image forming system 50. The used equipment information collecting device 70 can export the collected used equipment information 50a as a comma separated values (CSV) file based on, for example, instructions from the dealer. The dealer may directly obtain the used equipment information 50a that is exported as a CSV file from the image forming apparatus in the image forming system 50, not via the used equipment information collecting device 70.

Note that, the used equipment information 50a obtained by the dealer from the image forming system 50 is information indicating the print environment of the customer.

The dealer can instruct the user terminal 20 to log in to the proposal server 30 by, for example, inputting a user ID and password of the dealer via the operation unit 21 of the user terminal 20. The control unit 25 of the user terminal 20 requests, under instructions from the dealer, a login to the proposal server 30 from the proposal server 30 via the network communication unit 23.

If the combination of the user ID and password of the dealer that is input via the network communication unit 33 is stored in the storage unit 34, the control unit 35 of the proposal server 30 determines that authentication of the dealer is successful, and permits the login of the dealer.

After the login to the proposal server 30, the dealer can instruct the proposal server 30 to generate the product proposal information via the user terminal 20 by instructing, via the operation unit 21, the user terminal 20 to import to the proposal server 30 the used equipment information 50a obtained as a CSV file from the image forming system 50.

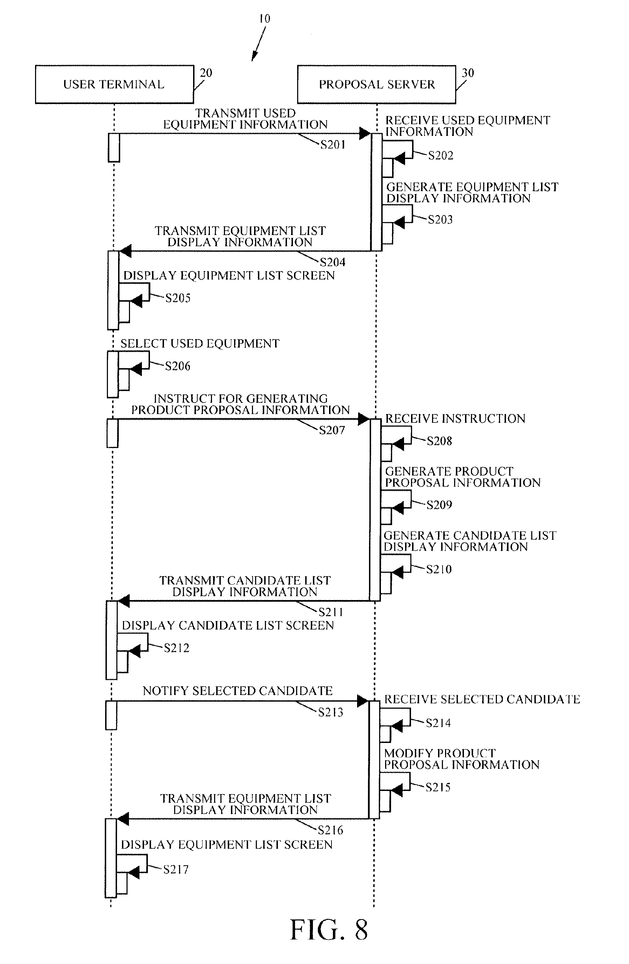

FIG. 8 shows a procedure of operations of the proposal system 10 when the product proposal information is generated.

As in FIG. 8, the control unit 25 of the user terminal 20 transmits, under instructions from the dealer, the used equipment information 50a via the network communication unit 23 to the proposal server 30 (S201).

Then, the used equipment information receiving unit 35a of the control unit 35 of the proposal server 30 receives via the network communication unit 33 the used equipment information 50a transmitted from the user terminal 20 in S201 (S202).

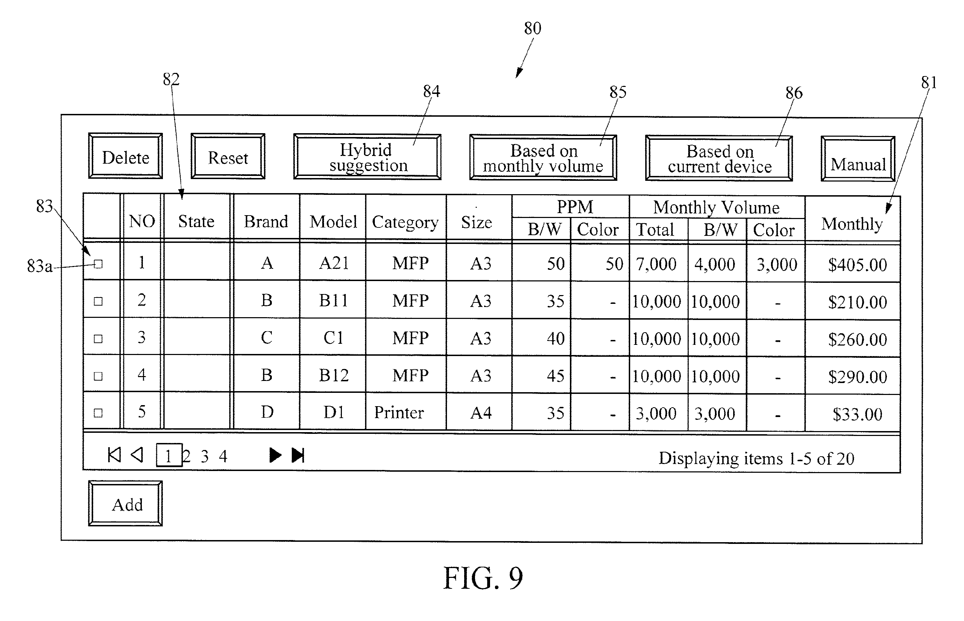

Then, the product proposal information generating unit 35b of the control unit 35 generates, based on the used equipment information 50a received in S202 and the catalog information 34b on the storage unit 34, information for displaying an equipment list screen 80 that, as in FIG. 9, displays a list of image forming apparatus included in the used equipment information 50a that is received in S202 (hereinafter referred to as "equipment list display information") (S203).

FIG. 9 shows an exemplary equipment list screen 80 displayed on the display unit 22 of the user terminal 20.

As in FIG. 9, the equipment list screen 80 includes an equipment display region 81 for displaying a list of image forming apparatus, a state display region 82 for displaying the states of the image forming apparatus displayed in the equipment display region 81, a selection state display region 83 for displaying selection states of the image forming apparatus displayed in the equipment display region 81, and a button 84, a button 85, and a button 86 for instructing generation of the product proposal information.

The equipment display region 81 includes as items, for example, "Brand", "Model", "Category", "Size", "PPM", and "Monthly Volume", and "Monthly" as an item indicating the actual monthly billed amount of the image forming apparatus.

The state display region 82 includes "State" as an item indicating the state of the image forming apparatus.

The selection state display region 83 includes check boxes 83a each indicating a selection state of the image forming apparatus.

The button 84 is used for providing an instruction for generating the product proposal information by "Hybrid suggestion" as logic that places prime importance on the actual usage of the used equipment.

The button 85 is used for providing an instruction for generating the product proposal information by "Based on monthly volume" as logic that places importance on a specification value of the used equipment and considers only "Monthly Volume" as the actual usage of the used equipment.

The button 86 is used for providing an instruction for generating the product proposal information by "Based on current device" as logic that places prime importance on the specification value of the used equipment.

As in FIG. 8, the product proposal information generating unit 35b transmits, after the processing in S203, the equipment list display information generated in S203 via the network communication unit 33 to the user terminal 20 (S204).

When the control unit 25 of the user terminal 20 receives via the network communication unit 23 the equipment list display information transmitted from the proposal server 30 in S204, the control unit 25 displays the equipment list screen 80 as in FIG. 9 based on the received equipment list display information (S205).

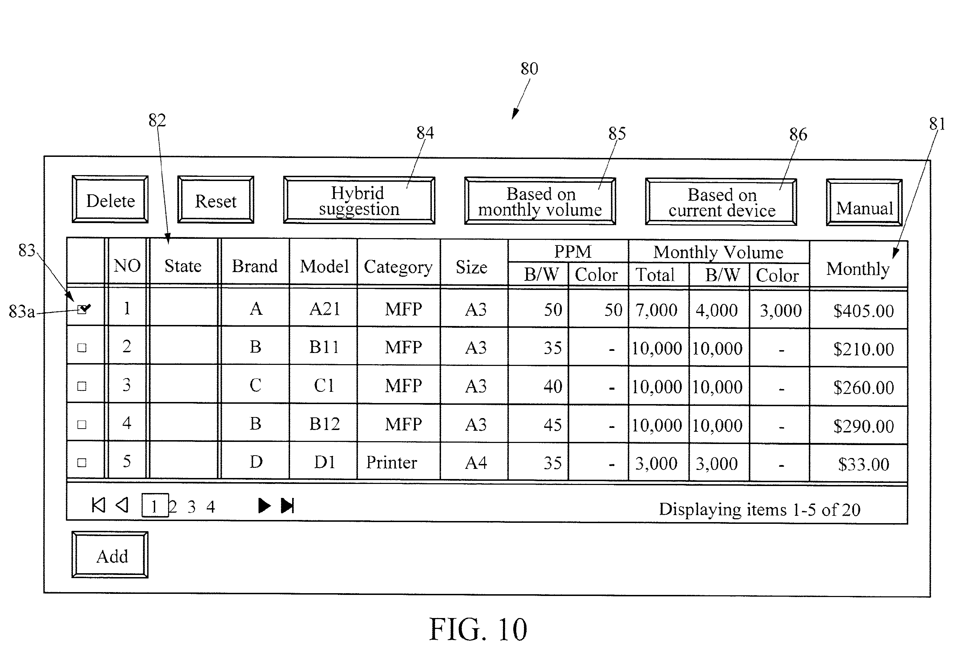

When a piece of used equipment is selected via the operation unit 21 by selecting the check box 83a on the equipment list screen 80, the control unit 25 causes the check box 83a of the selected used equipment to be in a selected state as illustrated FIG. 10 (S206).

Then, when any one of the buttons 84 to 86 on the equipment list screen 80 is pressed via the operation unit 21, the control unit 25 transmits an instruction for generating the product proposal information via the network communication unit 23 to the proposal server 30 (S207).

Then, the control unit 35 of the proposal server 30 receives via the network communication unit 33 the instruction transmitted from the user terminal 20 in S207 (S208). In this case, the selected equipment receiving unit 35c of the control unit 35 receives the used equipment selected in S206. Further, the selected logic receiving unit 35d of the control unit 35 receives logic corresponding to the button that has generated the instruction received in S208 among the buttons 84 to 86 on the instruction equipment list screen 80, that is, logic selected from the plurality of logics for generating the product proposal information.

Then, the product proposal information generating unit 35b of the control unit 35 generates the product proposal information based on the instruction received in S208 (S209).

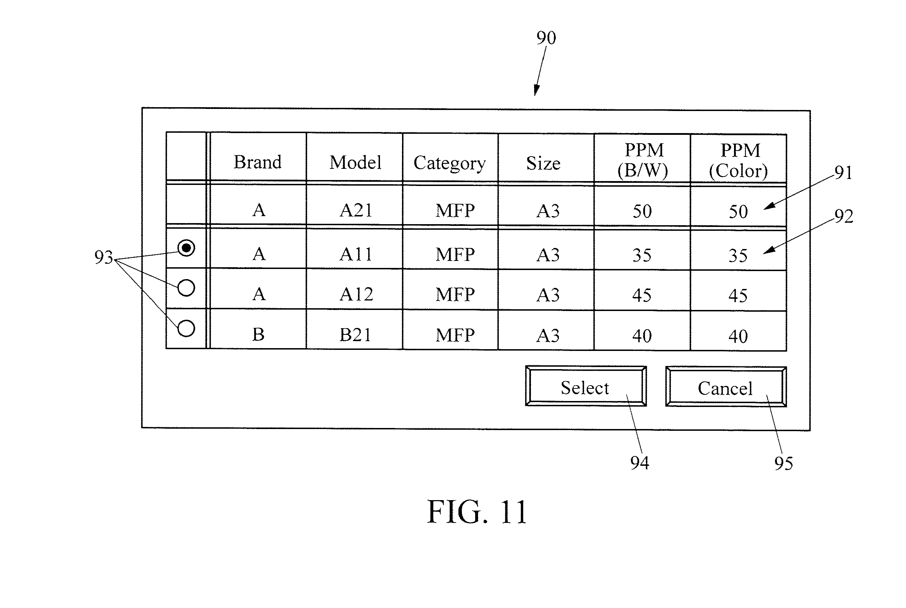

Then, the selected candidate receiving unit 35e of the control unit 35 generates, based on the catalog information 34b on the storage unit 34, information for displaying a candidate list screen 90 that, as in FIG. 11, displays a list of product candidates included in the product proposal information that is generated in S209 (hereinafter referred to as "candidate list display information") (S210).

FIG. 11 illustrates an exemplary candidate list screen 90 displayed on the display unit 22 of the user terminal 20.

As in FIG. 11, the candidate list screen 90 includes a used equipment display region 91 for displaying the present used equipment, a candidate display region 92 for displaying a candidate list, radio buttons 93 for selecting a candidate among candidates displayed in the candidate display region 92, a button 94 for providing an instruction for selecting a candidate, and a button 95 for providing an instruction for cancelling selection of a candidate.

The used equipment display region 91 and the candidate display region 92 include, for example, "Brand", "Model", "Category", "Size", "PPM (B/W)", and "PPM (Color)". The item "PPM (B/W)" is the same as the item "B/W" in the item "PPM" in the catalog information 34b. The item "PPM (Color)" is the same as the item "Color" in the item "PPM" in the catalog information 34b.

As in FIG. 8, the selected candidate receiving unit 35e transmits, after the processing in S210, the candidate list display information generated in S210 via the network communication unit 33 to the user terminal 20 (S211).

When the control unit 25 of the user terminal 20 receives via the network communication unit 23 the candidate list display information transmitted from the proposal server 30 in S211, the control unit 25 displays on the display unit 22 the candidate list screen 90 as in FIG. 11 based on the received candidate list display information (S212).

When a candidate is selected via the operation unit 21 by selecting one of the radio buttons 93 on the candidate list screen 90 and the button 94 on the candidate list screen 90 is pressed via the operation unit 21, the control unit 25 transmits a notification of the candidate selected by the radio button 93 via the network communication unit 23 to the proposal server 30 (S213).

Then, the selected candidate receiving unit 35e of the control unit 35 of the proposal server 30 receives the selected candidate based on the notification transmitted from the user terminal 20 in S213 (S214).

Then, the product proposal information generating unit 35b of the control unit 35 modifies the equipment list display information by modifying the product proposal information for the candidate received in S214 (S215).

Then, the product proposal information generating unit 35b transmits the equipment list display information modified in S215 via the network communication unit 33 to the user terminal 20 (S216).

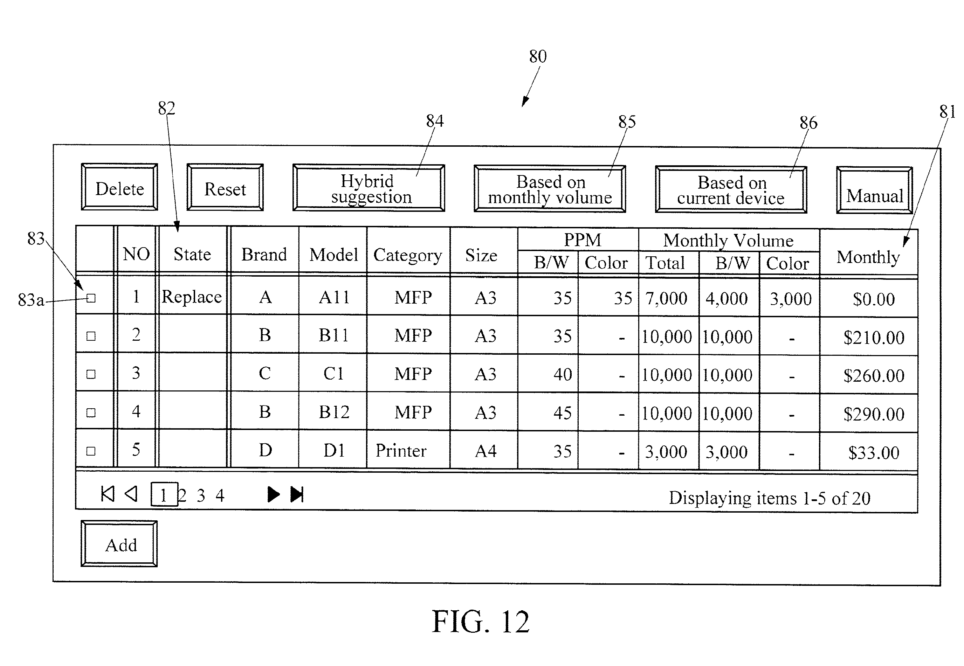

When the control unit 25 of the user terminal 20 receives via the network communication unit 23 the equipment list display information transmitted from the proposal server 30 in S216, the control unit 25 displays the equipment list screen 80 as in FIG. 12 based on the received equipment list display information (S217).

The equipment list screen 80 as in FIG. 12 indicates a state in which, in the equipment list screen 80 as in FIG. 9, regarding the first image forming apparatus, the used equipment is replaced with a proposed product and the value of the item "State" is modified to be "Replace".

The flow when the product proposal information is generated is described above. The dealer as the user of the user terminal 20 can propose a product suitable for a customer by, for example, presenting to the customer the product proposal information displayed on the display unit 22. The customer can, for example, reduce the maintenance cost of the image forming apparatus by, for example, replacing the present used equipment with the proposed product based on the product proposal information.

Note that, if a plurality of pieces of used equipment is selected in S206, the candidate list screen 90 is displayed on the display unit 22 of the user terminal 20 regarding each of the plurality of pieces of used equipment selected in S206.

Further, in the above, the case in which the button 94 of the candidate list screen 90 is pressed has been described. When the button 95 of the candidate list screen 90 is pressed, the used equipment included in the candidate list screen 90 is not replaced with a proposed product in the equipment list screen 80.

Further, in the above, the case in which product candidates are included in the product proposal information generated in S209 has been described. When no product candidate is included in the product proposal information, instead of displaying a product candidate, information indicating that no product candidate is found, for example, a message "!Not find satisfactory machine" is displayed on the candidate list screen 90.

Next, generation of the product proposal information in S209 is described.

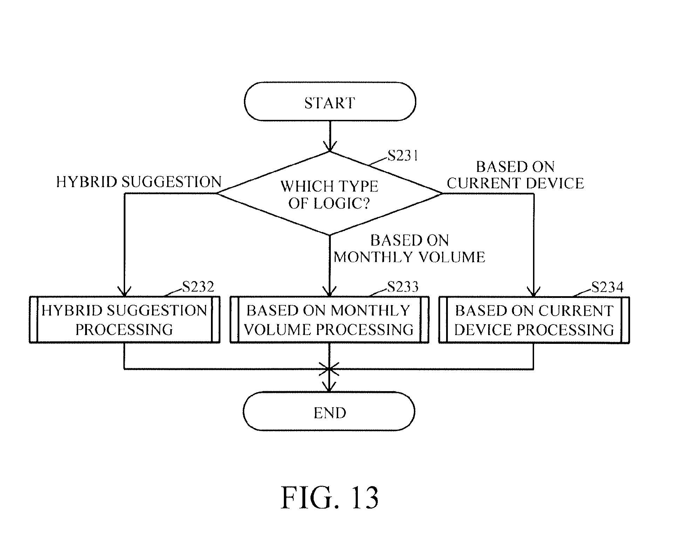

FIG. 13 shows a procedure of operations of the proposal server 30 when the product proposal information is generated.

As in FIG. 13, the product proposal information generating unit 35b of the control unit 35 of the proposal server 30 determines a type of the logic received in S208 (S231).

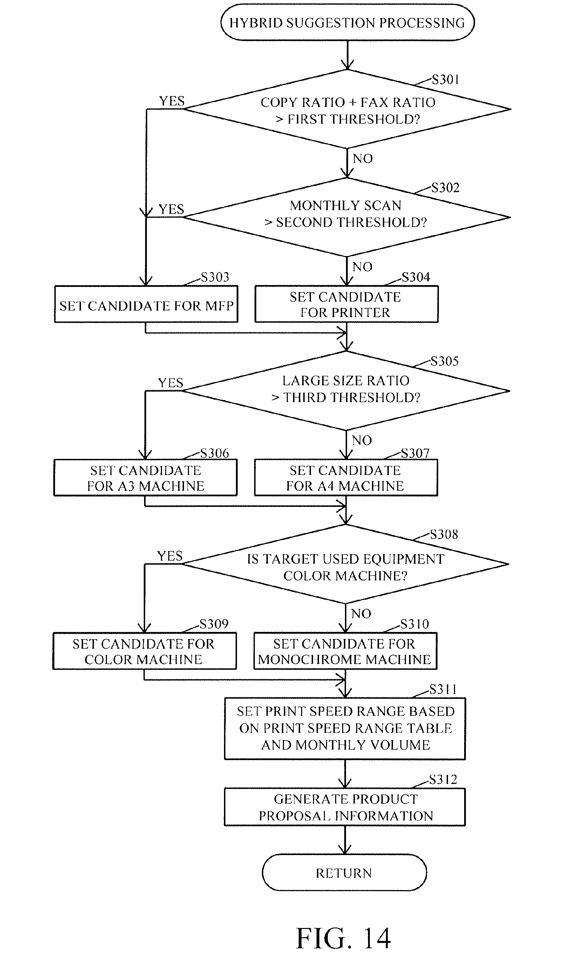

When the logic received in S208 is determined to be "Hybrid suggestion" in S231, the product proposal information generating unit 35b executes Hybrid suggestion processing as in FIG. 14 (S232) and ends operations as in FIG. 13.

FIG. 14 shows a procedure of the Hybrid suggestion processing.

As in FIG. 14, the product proposal information generating unit 35b determines whether or not the total value of the value of the item "Copy Ratio" and value of the item "FAX Ratio" of the used equipment received in S208 (hereinafter referred to as "target used equipment") in the used equipment information 50a exceeds the first threshold 34c for selecting a product kind (S301).

When the product proposal information generating unit 35b determines that the total value does not exceed the first threshold 34c for selecting a product kind in S301, the product proposal information generating unit 35b determines whether or not the value of the item "Monthly Scan" of the target used equipment in the used equipment information 50a exceeds the second threshold 34d for selecting a product kind (S302).

When the product proposal information generating unit 35b determines that the total value exceeds the first threshold 34c for selecting a product kind in S301 or when the product proposal information generating unit 35b determines that the value of the item "Monthly Scan" exceeds the second threshold 34d for selecting a product kind in S302, the product proposal information generating unit 35b sets the kind of the product as a candidate to be proposed to be "MFP" (S303).

When the product proposal information generating unit 35b determines that the value of the item "Monthly Scan" does not exceed the second threshold 34d for selecting a product kind in S302, the product proposal information generating unit 35b sets the kind of the product as a candidate to be proposed to be "Printer" (S304).

After the processing in S303 or S304, the product proposal information generating unit 35b determines whether or not the value of the item "Large Size Ratio" of the target used equipment in the used equipment information 50a exceeds the third threshold 34e for selecting a printable size (S305).

When the product proposal information generating unit 35b determines that the value of the item "Large Size Ratio" exceeds the third threshold 34e for selecting a printable size in S305, the product proposal information generating unit 35b sets the product as a candidate to be proposed to be an A3 machine (S306).

On the other hand, when the product proposal information generating unit 35b determines that the value of the item "Large Size Ratio" does not exceed the third threshold 34e for selecting a printable size in S305, the product proposal information generating unit 35b sets the product as a candidate to be proposed to be an A4 machine (S307).

After the processing in S306 or S307, the product proposal information generating unit 35b determines whether the target used equipment is a color machine or not based on the value of the item "Color" in the item "PPM" in the catalog information 34b (S308). Specifically, if the value of the item "Color" is a value other than "-", the product proposal information generating unit 35b determines that the target used equipment is a color machine, and, if the value of the item "Color" is "-", the product proposal information generating unit 35b determines that the target used equipment is a monochrome machine.

When the product proposal information generating unit 35b determines that the target used equipment is a color machine in S308, the product proposal information generating unit 35b sets the product as a candidate to be proposed to be a color machine (S309).

On the other hand, when the product proposal information generating unit 35b determines that the target used equipment is not a color machine in S308, the product proposal information generating unit 35b sets the product as a candidate to be proposed to be a monochrome machine (S310).

After the processing in S309 or S310, the product proposal information generating unit 35b sets the print speed range of the product as a candidate to be proposed based on the print speed range table according to the setting in S303 or S304, the setting in S306 or S307, and the setting in S309 or S310 and on the value of the item "Total" in the item "Monthly Volume" of the target used equipment in the used equipment information 50a (S311).

For example, if the kind of the product as a candidate to be proposed is set to be "MFP" in S303, the product as a candidate to be proposed is set to be an A3 machine in S306, and the product as a candidate to be proposed is set to be a color machine in S309, the product proposal information generating unit 35b selects the first print speed range table 34f for an A3 color MFP shown in FIG. 5 as a print speed range table based on these settings. If the value of the item "Total" in the item "Monthly Volume" of the target used equipment in the used equipment information 50a is "7,000", "7,000" as the value of the item "Total" in the item "Monthly Volume" of the target used equipment in the used equipment information 50a is included in "6,000-7,999" as the value of the item "Recommended Monthly Print Paper Count Range" in the first print speed range table 34f for an A3 color MFP, and thus, the product proposal information generating unit 35b sets "31-45" as the value of the item "PPM Range" corresponding to "6,000-7,999" as the value of the item "Recommended Monthly Print Paper Count Range" in the first print speed range table 34f for an A3 color MFP as the print speed range of the product as a candidate to be proposed.

The product proposal information generating unit 35b extracts, after the processing in S311, products that satisfy all of the condition set in S303 or S304, the condition set in S306 or S307, the condition set in S309 or S310, and the condition set in S311 from the catalog information 34b, and generates the product proposal information that includes the extracted products as candidates (S312). Note that, if the product as a candidate to be proposed is set to be a color machine in S309, the product proposal information generating unit 35b determines that a product whose value of the item "Color" in the item "PPM" in the catalog information 34b is included in the print speed range that is set in S311 is a product that satisfies the condition set in S311. Similarly, if the product as a candidate to be proposed is set to be a monochrome machine in S310, the product proposal information generating unit 35b determines that a product whose value of the item "B/W" in the item "PPM" in the catalog information 34b is included in the print speed range that is set in S311 is a product that satisfies the condition set in S311.

After the processing in S312, the product proposal information generating unit 35b terminates the operation as in FIG. 14.

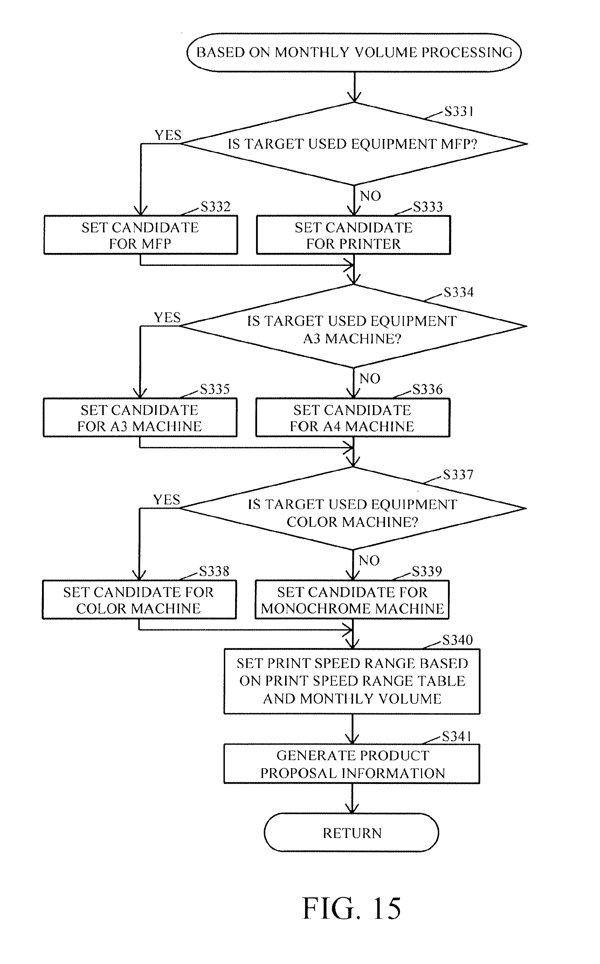

As in FIG. 13, when the logic received in S208 is determined "Based on monthly volume" in S231, the product proposal information generating unit 35b executes Based on monthly volume processing as in FIG. 15 (S233) and terminates the operation as in FIG. 13.

FIG. 15 illustrates a procedure of the Based on monthly volume processing.

As in FIG. 15, the product proposal information generating unit 35b determines whether the target used equipment is an MFP or not based on the value of the item "Category" in the catalog information 34b (S331).

When the product proposal information generating unit 35b determines that the target used equipment is an MFP in S331, the product proposal information generating unit 35b sets the kind of the product as a candidate to be proposed to be "MFP" (S332).

On the other hand, when the product proposal information generating unit 35b determines that the target used equipment is not an MFP in S331, the product proposal information generating unit 35b sets the kind of the product as a candidate to be proposed to be "Printer" (S333).

After the processing in S332 or S333, the product proposal information generating unit 35b determines whether the target used equipment is an A3 machine or not based on the value of the item "Size" in the catalog information 34b (S334).

When the product proposal information generating unit 35b determines that the target used equipment is an A3 machine in S334, the product proposal information generating unit 35b sets the product as a candidate to be proposed to be an A3 machine (S335).

On the other hand, when the product proposal information generating unit 35b determines that the target used equipment is not an A3 machine in S334, the product proposal information generating unit 35b sets the product as a candidate to be proposed to be an A4 machine (S336).

After the processing in S335 or S336, the product proposal information generating unit 35b executes processing in S337 to S339 similarly to the processing in S308 to S310 as in FIG. 14.

After the processing in S338 or S339, the product proposal information generating unit 35b sets, similarly to the processing in S311 as in FIG. 14, the print speed range of the product as a candidate to be proposed based on the print speed range table based on the setting in S332 or S333, the setting in S335 or S336, and the setting in S338 or S339 and on the value of the item "Total" in the item "Monthly Volume" of the target used equipment in the used equipment information 50a (S340).

Then, the product proposal information generating unit 35b extracts, similarly to the processing in S312 as in FIG. 14, products that satisfy all of the condition set in S332 or S333, the condition set in S335 or S336, the condition set in S338 or S339, and the condition set in S340 from the catalog information 34b and generates the product proposal information that includes the extracted products as candidates (S341), and terminates the operation as in FIG. 15.

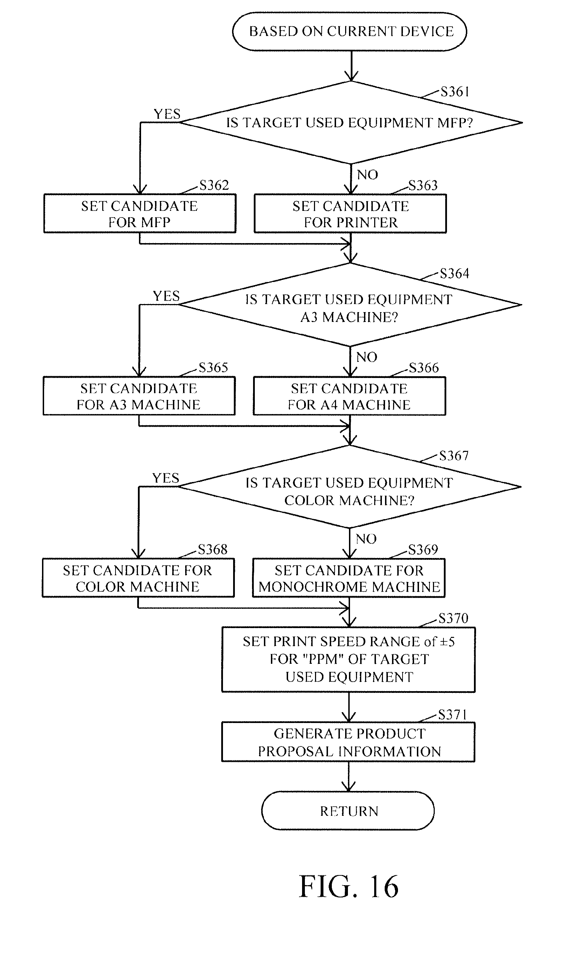

As in FIG. 13, when the logic received in S208 is determined "Based on current device" in S231, the product proposal information generating unit 35b executes Based on current device processing as in FIG. 16 (S234) and terminates the operation as in FIG. 13.

FIG. 16 illustrates a procedure of the Based on current device processing.

As in FIG. 16, the product proposal information generating unit 35b executes processing in S361 to S369 similarly to the processing in S331 to S339 as in FIG. 15.

After the processing in S368 or S369, the product proposal information generating unit 35b sets a range of from a value that is the value of the item "PPM" of the target used equipment in the catalog information 34b minus 5 to a value that is the value of the item "PPM" plus 5 as the print speed range (S370). Note that, if the product as a candidate to be proposed is set to be a color machine in S368, the product proposal information generating unit 35b sets a range of from a value that is the value of the item "Color" in the item "PPM" in the catalog information 34b minus 5 to a value that is the value of the item "Color" plus 5 as the print speed range. If the product as a candidate to be proposed is set to be a monochrome machine in S369, the product proposal information generating unit 35b sets a range of from a value that is the value of the item "B/W" in the item "PPM" in the catalog information 34b minus 5 to a value that is the value of the item "B/W" plus 5 as the print speed range.

Then, the product proposal information generating unit 35b extracts, similarly to the processing in S312 as in FIG. 14, products that satisfy all of the condition set in S362 or S363, the condition set in S365 or S366, the condition set in S368 or S369, and the condition set in S370 from the catalog information 34b and generates the product proposal information that includes the extracted products as candidates (S371), and terminates the operation as in FIG. 16.

As described above, the proposal system 10 generates the product proposal information 34n by the logic based on the determination by the dealer (S231 to S234) by enabling the dealer to select the logic for generating the product proposal information 34n based on the used equipment information 50a (S207), and thus, the product proposal information 34n can be generated by suitable logic. In other words, the proposal system 10 can make the proposal of a product more suitable.

Specifically, the proposal system 10 can enable the dealer to select any one of "Based on monthly volume" as the logic for extracting products based on the specification value of the used equipment in relation to the item "Category" indicating the kind of the image forming apparatus based on the kind of the job executable by the image forming apparatus (S331 to S333 and S341), "Based on current device" as the logic for extracting products based on the specification value of the used equipment in relation to the item "Category" (S361 to S363 and S371), and "Hybrid suggestion" as the logic for extracting products based on the actual usage of the used equipment in relation to the item "Category" (S301 to S304 and S312). Therefore, products extracted based on any one of the specification value of the used equipment and the actual usage of the used equipment on which the dealer places importance can be proposed, and, as a result, it is possible to make the proposal of a product more suitable.

Further, the proposal system 10 can enable the dealer to select any one of "Based on monthly volume" as the logic for extracting products based on the specification value of the used equipment in relation to the item "Size" indicating the maximum paper size printable by the image forming apparatus (S334 to S336 and S341), "Based on current device" as the logic for extracting products based on the specification value of the used equipment in relation to the item "Size" (S364 to S366 and S371), and "Hybrid suggestion" as the logic for extracting products based on the actual usage of the used equipment in relation to the item "Size" (S305 to S307 and S312). Therefore, products extracted based on any one of the specification value of the used equipment and the actual usage of the used equipment on which the dealer places importance can be proposed, and, as a result, it is possible to make the proposal of a product more suitable.

Further, the proposal system 10 can enable the dealer to select any one of "Based on current device" as the logic for extracting products based on the specification value of the used equipment in relation to the item "PPM" indicating the print speed of the image forming apparatus (S370 and S371), "Hybrid suggestion" as the logic for extracting products based on the actual usage of the used equipment in relation to the item "PPM" (S311 and S312), and "Based on monthly volume" as the logic for extracting products based on the actual usage of the used equipment in relation to the item "PPM" (S340 and S341). Therefore, products extracted based on any one of the specification value of the used equipment and the actual usage of the used equipment on which the dealer places importance can be proposed, and, as a result, it is possible to make the proposal of a product more suitable.

The proposal system 10 can automatically generate the product proposal information 34n by simple operation in which, after the used equipment information 50a is input from the user terminal 20 to the proposal server 30 (S201), instruction for generating the product proposal information 34n is input from the user terminal 20 to the proposal server 30 (S207). Therefore, even when the dealer does not have much knowledge about the products, by using the proposal system 10, the dealer can easily propose to a customer a product that is suitable for the customer.

The proposal system 10 can propose a product (S216 and S217) in relation to the used equipment selected by the dealer (S206). Therefore, a product can be proposed in relation to suitable used equipment. In other words, the proposal system 10 can make the proposal of a product more suitable.

Further, even when a plurality of pieces of used equipment are selected by the dealer (S206), the proposal system 10 can propose a product suitable for the customer regarding each of the plurality of pieces of used equipment selected by the dealer (S216 and S217) only by execution once of an instruction for generating the product proposal information by the dealer (S207). In other words, the proposal system 10 can enhance the convenience for the dealer who executes an instruction for generating the product proposal information.

The proposal system 10 can propose a product selected by the dealer among the product candidates (S210 to S217). Therefore, a suitable product can be proposed. In other words, the proposal system 10 can make the proposal of a product more suitable.

In the embodiment of the present disclosure, the used equipment and the products are image forming apparatus, but the used equipment and the products may be equipment other than image forming apparatus.

It should be understood that various changes and modifications to the presently embodiments described herein will be apparent to those skilled in the art. Such changes and modifications can be made without departing from the spirit and scope of the present subject matter and without diminishing its intended advantages. It is therefore intended that such changes and modifications be covered by the appended claims.

## Claims

1. A proposal server (30) for proposing products to customer, the proposal server (30) comprising:
- a communication unit (33) configured to communicate with an external device; and
- a control unit (35) configured to control the proposal server (30), wherein the control unit (35) comprises:
- a used equipment information receiving unit (35a) configured to receive used equipment information regarding a used equipment of a customer, through the communication unit (33) from a user terminal (20);
- a product proposal information generating unit (35b) configured to generate product proposal information (34n) that is used to propose a product to the customer; and
- a selected logic receiving unit (35d) configured to receive logic selected from a plurality of logics for generating the product proposal information (34n) by the product proposal information generating unit (35b),
and wherein the product proposal information generating unit (35b) is further configured to generate the product proposal information (34n) by the logic received by the selected logic receiving unit (35d) based on the used equipment information received by the used equipment information receiving unit (35a).

2. A system (10) for proposing products to customer, the system (10) comprising:
- the proposal server (30) according to claim 1;
- a used equipment information collecting device (70) configured to collect the used equipment information from the used equipment and output the collected used equipment information; and
- a user terminal (20) configured to acquire and transmit the collected used equipment information that is output from the used equipment information collecting device (70).

3. The proposal system (10) according to claim 2, wherein the plurality of logics comprises:
- first logic for extracting the product based on a specification value of the used equipment in relation to a specific item for extracting the product by the product proposal information generating unit (35b); and
- second logic for extracting the product based on actual usage of the used equipment based on the used equipment information in relation to the item.

4. The proposal system (10) according to claim 3, wherein:
the used equipment and the product comprise image forming apparatus (60); and
the specific item includes an item indicating a kind of the image forming apparatus (60) based on a kind of a job executable by the image forming apparatus (60).

5. The proposal system (10) according to claim 3 or 4, wherein:
the used equipment and the product comprise image forming apparatus (60); and
the specific item includes an item indicating a maximum paper size printable by the image forming apparatus (60).

6. The proposal system (10) according to any one of claims 3 to 5, wherein:
the used equipment and the product comprise image forming apparatus (60); and
the specific item includes an item indicating a print speed of the image forming apparatus (60).

7. The proposal system (10) according to any one of claims 2 to 6, further comprising a selected equipment receiving unit (35c) configured to receive a used equipment selected from the used equipment included in the used equipment information,
wherein the product proposal information generating unit (35b) is further configured to generate the product proposal information (34n) based on the used equipment received by the selected equipment receiving unit (35c).

8. The proposal system (10) according to any one of claims 2 to 7, further comprising a selected candidate receiving unit (35e) configured to receive a candidate selected from candidates of the product that are included in the product proposal information (34n),
wherein the product proposal information generating unit (35b) is further configured to modify the product proposal information (34n) for the candidate received by the selected candidate receiving unit (35e).

9. A proposal method that is executed by a proposal system including a proposal server (30), an equipment use information collection device (70), and a user terminal (20), the method comprising:
- collecting, via the equipment use information collecting device (70), the used equipment information from the used equipment and output the collected used equipment information;
- acquiring and transmitting, via the user terminal (20), the collected used equipment information that is output from the used equipment information collecting device (70);
- communicating, via the communication unit (33) of the proposal server (30), with an external device; and
- controlling, via a control unit (35) of the proposal server (30), the
proposal server (30),
wherein the controlling includes:
- receiving, via a used equipment information receiving unit (35a), used equipment information about a used equipment of a customer, through the communication unit (33) from the user terminal (20);
- generating, via a product proposal information generating unit (35b), product proposal information (34n) that is used to propose a product to the customer;
- receiving, via a selected logic receiving unit (35d), logic selected from a plurality of logics for generating the product proposal information (34n) by the product proposal information generating unit (35b); and
- generating, via the product proposal information generating unit (35b), the product proposal information (34n) by the logic received by the selected logic receiving unit (35d) based on the used equipment information received by the used equipment information receiving unit (35a).

10. A non-transitory computer-readable recording medium that stores a proposal program executable by a computer of a proposal server (30), the proposal program comprising:
- a first program code that causes the computer to communicate with an external terminal; and
- a second program code that causes the computer to control the proposal server (30), the second program code includes:
- a first sub program code for causing the computer to receive, by the first program code, used equipment information regarding a used equipment of a customer;
- a second sub program code for causing the computer to generate product proposal information (34n) that is used to propose a product to the customer; and
- a third sub program code for causing the computer to receive logic selected from a plurality of logics for generating the product proposal information (34n) by the second sub program code,
wherein the second sub program code further causes the computer to generate the product proposal information (34n) by the logic received by the third sub program code based on the used equipment information received by the first sub program code.
